# EUROPEAN PATENT APPLICATION

(11) **EP 1 935 472 A1**
(43) Date of publication of application: **25.06.2008**
(21) Application number: 07150078.9
(22) Date of filing: 17.12.2007
(51) Int. Cl.: B01D 46/10, B01D 46/52, B01D 46/00

(54) **Vehicle engine air intake filter**

(30) Priority: 18.12.2006 IT BO20060857
(71) Applicant: BMC S.R.L., 40059 Medicina BO (IT)
(72) Inventor: Bergami, Gaetano, 40059, Medicina (IT)
(74) Representative: Jorio, Paolo

(57) **Abstract**

A filter (1) for a vehicle engine air intake; the filter (1) has an undulated filtering element (2), and a rigid peripheral frame (3) surrounding and supporting the filtering element (2), and having a C-shaped annular seat (4) housing the peripheral edge of the filtering element (2); the peripheral edge of the filtering element (2) is secured inside the annular seat (4) by a layer (5) of glue completely filling the annular seat (4); and the peripheral frame (3) is made of composite material, and formed by gluing together a flat top annular border (6), made from a single sheet of material, and an S-shaped bottom annular border (7), also made from a single sheet of material.

## Description

### TECHNICAL FIELD

The present invention relates to a vehicle engine air intake filter.

### BACKGROUND ART

Flat filters are known comprising an undulated filtering element fixed to a peripheral frame to impart mechanical strength to the filtering element.

In one embodiment, the peripheral frame is normally made of plastic (e.g. polyurethane) material molded onto the filtering element so as to incorporate a peripheral portion of the filtering element. This embodiment is only suitable for filters housed, in use, inside a closed casing and not subjected to direct mechanical stress, one example of which is illustrated, for example, in Patent Application IT2004BO00156.

In another embodiment, the peripheral frame comprises a number of shaped metal members welded or screwed to one another. This embodiment is normally used when the filter is fixed by screws or similar in front of a vehicle air intake. Currently marketed filters of this type, however, are heavy and complicated to produce, and therefore unsuitable for aircraft applications and particularly helicopter air intakes.

### DISCLOSURE OF THE INVENTION

It is an object of the present invention to provide a vehicle engine air intake filter designed to eliminate the above drawbacks, and which at the same time is cheap and easy to produce.

According to the present invention, there is provided a vehicle engine air intake filter as claimed in the accompanying Claims.

### BRIEF DESCRIPTION OF THE DRAWINGS

A non-limiting embodiment of the present invention will be described by way of example with reference to the accompanying drawings, in which:
Figure 1 shows a plan view of a filter in accordance with the present invention;
Figure 2 shows a section along line II-II of the Figure 1 filter;
Figure 3 shows an exploded section along line II-II of the Figure 1 filter;
Figure 4 shows a side view of a variation of the Figure 1 filter.

### PREFERRED EMBODIMENTS OF THE INVENTION

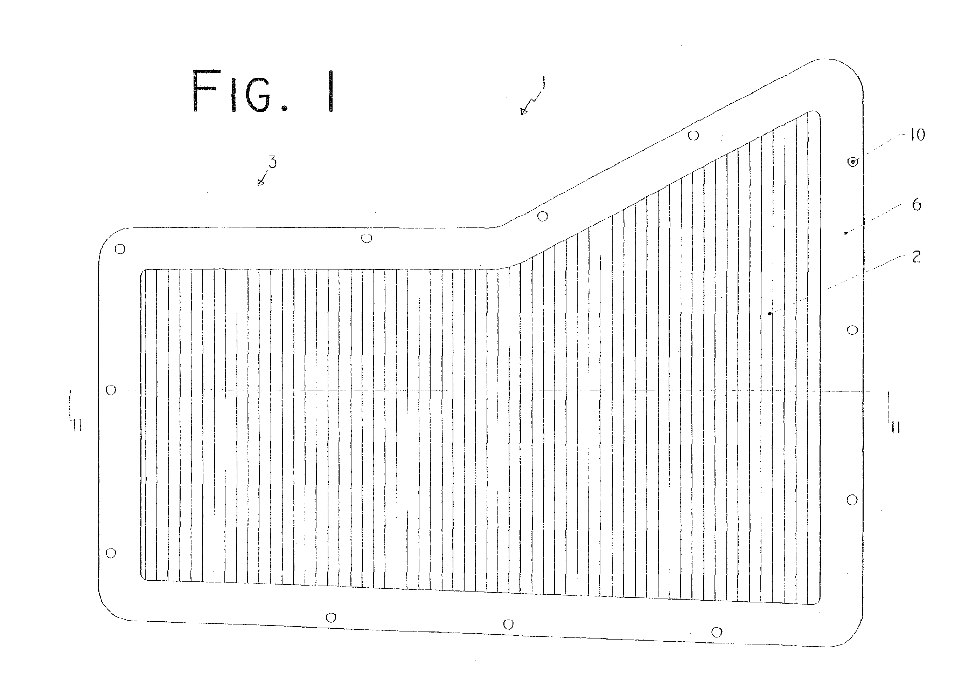

Number 1 in Figure 1 indicates as a whole a filter for the air intake of a vehicle engine (not shown).

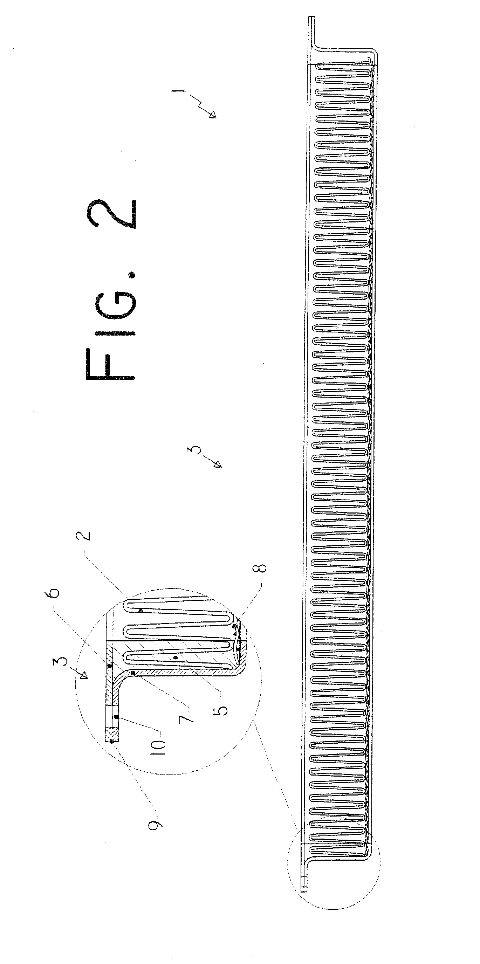

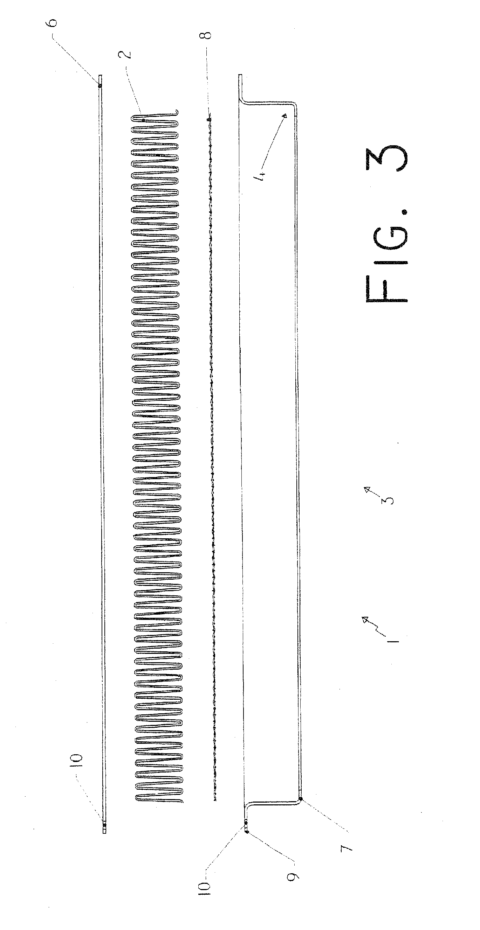

As shown in Figures 1-3, filter 1 comprises an undulated filtering element 2; and a rigid peripheral frame 3 surrounding and supporting filtering element 2, and having a C-shaped annular seat 4 housing the peripheral edge of filtering element 2.

The peripheral edge of filtering element 2 is secured inside annular seat 4 by a layer 5 of glue completely filling annular seat 4. By way of example, the glue used to secure the peripheral edge of filtering element 2 inside annular seat 4 may be polyurethane, silicone, epoxy glue or similar.

Filtering element 2 is preferably defined by an undulated filtering component covered on both sides with aluminium retaining nets (not shown in detail) for maintaining the shape of the undulated filtering component (alternatively, the retaining nets may be made of stainless steel or composite material). The filtering component is made of cloth (e.g. cotton or synthetic material or even other non-inflammable material) soaked in oil and folded to form, for example, four superimposed layers. The filtering component cloth may, of course, form a different number of layers, and need not necessarily be soaked in oil. In the embodiment shown, filtering element 2 has a transverse thickness of 34 mm, and 8 mm spacing between adjacent undulations.

Peripheral frame 3 is formed by joining a flat top annular border 6, made from a single sheet of material, and an S-shaped bottom annular border 7, also made from a single sheet of material. In a preferred embodiment, the two borders 6, 7 of peripheral frame 3 are made from sheets of composite material and are glued together. The sheets of the two borders 6, 7 of peripheral frame 3 are typically made of carbon fibre, and are each 2 mm thick.

In a preferred embodiment, a reinforcing net 8 is interposed between filtering element 2 and bottom annular border 7 of peripheral frame 3, rests on bottom annular border 7, and provides for reinforcing undulated filtering element 2 to withstand the air intake pressure without deforming. The function of reinforcing net 8 is particularly important in the case of large-area filters 1.

Reinforcing net 8 is normally made of metal, preferably 1 mm diameter stainless steel, wire, and, in the embodiment shown, has a mesh size of 25 mm² in the form of a 5x5 mm square.

Peripheral frame 3 has an outer edge 9 projecting outwards of annular seat 4 and having a number of through holes 10 for screws by which to assemble filter 1.

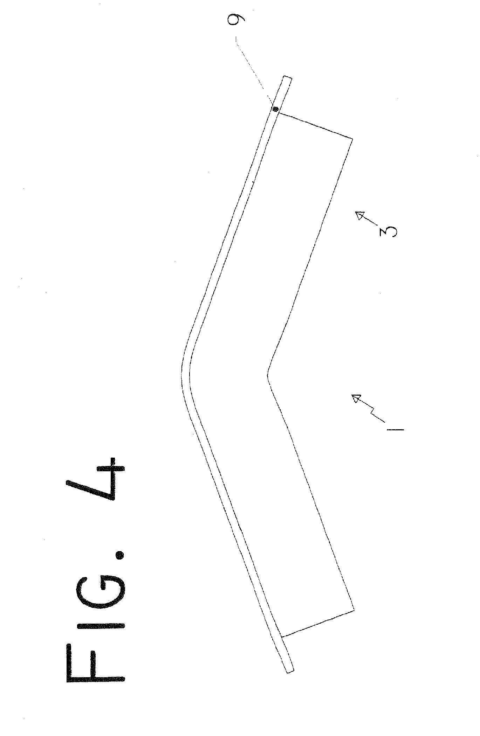

In the embodiment shown, peripheral frame 3 is flat. In a different embodiment shown in Figure 4, peripheral frame 3 is non-flat, inverted-V-shaped.

Filter 1 as described above has numerous advantages. In particular, it is cheap and easy to produce, and, above all, despite its structural rigidity and mechanical strength, is much lighter than similar marketed filters. Moreover, filter 1 as described above allows the use of large-area filtering elements 2, and is therefore particularly suitable for aircraft applications, and particularly for helicopter air intakes.

## Claims

1. A filter (1) for a vehicle engine air intake; the filter (1) comprising:
an undulated filtering element (2);
a rigid peripheral frame (3) surrounding and supporting the filtering element (2), and having a C-shaped annular seat (4) housing the peripheral edge of the filtering element (2);
the filter (1) being **characterized in that** the peripheral frame (3) is formed by joining a flat top annular border (6), made from a single sheet of material, and an S-shaped bottom annular border (7), also made from a single sheet of material.

2. A filter (1) as claimed in Claim 1, wherein the peripheral edge of the filtering element (2) is secured inside the annular seat (4) by a layer (5) of glue completely filling the annular seat (4).

3. A filter (1) as claimed in Claim 1 or 2, wherein the sheets of the two borders (6, 7) of the peripheral frame (3) are made of composite material, and the two borders (6, 7) are glued together.

4. A filter (1) as claimed in Claim 3, wherein the sheets of the two borders (6, 7) of the peripheral frame (3) are made of carbon fibre.

5. A filter (1) as claimed in Claim 4, wherein the sheet of each of the two borders (6, 7) of the peripheral frame (3) is 2 mm thick.

6. A filter (1) as claimed in one of Claims 1 to 5, wherein a reinforcing net (8) is interposed between the filtering element (2) and the bottom annular border (7) of the peripheral frame (3), and rests on the bottom annular border (7).

7. A filter (1) as claimed in Claim 6, wherein the reinforcing net (8) is made of metal.

8. A filter (1) as claimed in Claim 7, wherein the reinforcing net (8) is made of stainless steel.

9. A filter (1) as claimed in Claim 7, wherein the reinforcing net (8) is made of 1 mm diameter stainless steel wire.

10. A filter (1) as claimed in one of Claims 6 to 9, wherein the reinforcing net (8) has a mesh size of 25 mm².

11. A filter (1) as claimed in Claim 10, wherein each mesh of the reinforcing net (8) is in the form of a 5x5 mm square.

12. A filter (1) as claimed in one of Claims 1 to 11, wherein the peripheral frame (3) has an outer edge (9) projecting outwards of the annular seat (4) and having a number of through holes (10) for screws by which to assemble the filter (1).

13. A filter (1) as claimed in one of Claims 1 to 12, wherein the filtering element (2) has a transverse thickness of 34 mm, and 8 mm spacing between adjacent undulations.

14. A filter (1) as claimed in one of Claims 1 to 13, wherein the filtering element (2) is defined by an undulated filtering component covered on both sides with aluminium retaining nets.

15. A filter (1) as claimed in Claim 14, wherein the filtering component is made of cloth soaked in oil.

16. A filter (1) as claimed in Claim 14 or 15, wherein the filtering component comprises four superimposed layers.

17. A filter (1) as claimed in one of Claims 1 to 16, wherein the peripheral frame (3) is flat.

18. A filter (1) as claimed in one of Claims 1 to 16, wherein the peripheral frame (3) is non-flat.

19. A filter (1) as claimed in Claim 18, wherein the peripheral frame (3) is non-flat, V-shaped.
